Europäisches Patentamt

European Patent Office

Office européen des brevets

(11) Publication number: **0 021 694**
A1

## EUROPEAN PATENT APPLICATION

(21) Application number: 80301923.1

(22) Date of filing: 09.06.80

(51) Int. Cl.³: **C 09 J 3/14**

(30) Priority: 11.06.79 US 47426

(43) Date of publication of application:
07.01.81 Bulletin 81/1

(84) Designated Contracting States:
DE FR GB

(71) Applicant: MONSANTO COMPANY
Patent Department 800 North Lindbergh Boulevard
St. Louis, Missouri 63166(US)

(72) Inventor: Morgan, Albert Wayne
21 Susan Court
Collinsville, Illinois(US)

(72) Inventor: Ribaudo, Roland Gregory
6350 Monterey Drive
Affton, Missouri(US)

(74) Representative: Lunt, John Cooper et al,
Monsanto House 10-18 Victoria Street
London, SW1H ONQ(GB)

(54) Adhesive compositions prepared from copolymers of maleic monomers.

(57) Adhesive compositions providing high bond strength, long shelf life, desirable flow characteristics and end use versatility are prepared by mixing a copolymer of olefinic monomers including maleic anhydride and/or derivatives thereof, plasticizer and at least one monofunctional compound which reacts with the copolymer to render it soluble in the resulting mixture and substantially soluble in the plasticizer. Water based, hot melt and pressure sensitive embodiments of such compositions are included.

EP 0 021 694 A1

Croydon Printing Company Ltd.

- 1 -

ADHESIVE COMPOSITIONS PREPARED FROM COPOLYMERS
OF MALEIC MONOMERS

The search for new adhesives having im-
proved performance characteristics, including particu-
larly higher bond strength, is never-ending.  Another
important pursuit is the discovery of new adhesives
which do not require use of an organic solvent such
as those employed in typical contact cements, e.g.,
toluene, xylene, benzene, heptane and chlorinated hydrocarbons, which present problems of atmospheric pollution, safety (e.g. flammability) and recovery costs in
commercial uses.

Some adhesive studies have investigated combinations of copolymers of maleic anhydride and/or maleic
acid and a plasticizer.  However, such normally solid
copolymers have commonly required heating to at least
their melting points (generally from about 150° to
about 250°C.) to render them soluble in the plasticizer, e.g. as disclosed in U.S. Patent 4,077,935 issued
March 7, 1978 to W. R. Wszolek.  Major disadvantages
of the need for such high temperatures include higher
energy requirements and unsuitability for home use or
economical water-based adhesive systems.

Accordingly, there is a need for improved
adhesive compositions which do not require the use of
such high temperatures, and it is an object of this invention to provide such compositions. Another object is new adhesive compositions which do not require the use of organic solvents. Another object is a broad class of new adhesives characterized by unusually high bond strengths. Other objects include adhesive compositions having long shelf life, end use versatility and other desirable characteristics including convenient open times, degree of tack, etc. These and other objects of the invention will be more apparent from the following disclosure and claims in which all parts and percentages are by weight except where noted otherwise.

## Summary of the Invention

In accordance with this invention, the foregoing objects are achieved and novel, attractive adhesive compositions are prepared by mixing (A) plasticizer, (B) normally-solid copolymer of olefinically unsaturated monomers of which a substantial proportion are maleic monomers selected from maleic anhydride, derivatives thereof such as, e.g. maleic acid, maleic acid esters, etc. and combinations thereof and (C) compatibilizer selected from monofunctional compounds which react with at least a portion of the maleic monomers in the copolymer to render the copolymer soluble (usually essentially completely) in the resulting composition and substantially soluble in the plasticizer component of the mixture at a temperature below the melting point of the copolymer. Variations of such compositions are conveniently useful as water based, hot melt and/or pressure sensitive adhesives which do not require organic solvents and in many embodiments, provide surprisingly high bond strength.

## Detailed Description of the Invention

As used herein, the term "copolymer of olefinically unsaturated monomers" refers to polymers of monomers which polymerize by addition through olefinic bonds, e.g. ethylene, propylene, the butylenes, butadiene, vinyl chloride, vinyl acetate, vinyl propionate, methyl acrylate, methyl methacrylate, the maleic monomers referred to herein, etc. Copolymers of that kind which are used in this invention are normally solid, preferably have a number average molecular weight (MW) between about 5,000 and about 100,000, and are typically employed in a finely divided form, e.g. as particles at least about 90% of which have a major diameter smaller than about 100 microns. Such copolymers contain maleic monomers in substantial proportion, preferably between about 30 and about 70 mole percent, although lower or higher mole percentages may be satisfactory in some instances. Even more preferred in many embodiments are copolymers containing from about 40 to about 60 mole percent maleic monomers. Preferably the remainder of the unsaturated monomers (the non-maleic monomers) in the copolymer are essentially unreactive with the compatibilizer used in this invention, although such reactivity is not intolerable provided it does not interfere to prevent substantial realization of objects of this invention. In some preferred embodiments, the non-maleic monomers are essentially devoid of pendant acid (e.g. carboxylic acid) or anhydride radicals. Thus in many embodiments the non-maleic monomers are desirably unsubstituted $C_1-C_4$ olefins such as ethylene or propylene, vinyl hydrocarbons such as styrene, vinyl lower ($C_1-C_4$) alkyl ethers, etc. Combinations of such non-maleic monomers may also be used in embodiments in which the copolymer is composed of at least two olefinically unsaturated monomers in addition to the maleic monomers.

As used herein, the term "maleic monomers" includes maleic anhydride and derivatives thereof which do not render the copolymer substantially soluble in the plasticizer used in this invention at a temperature below the melting point of that copolymer. Such derivatives include maleic acid and maleic acid esters (usually half esters) such as, e.g. methyl, ethyl, n-propyl, isopropyl, n-butyl, isobutyl and tert-butyl esters of maleic acid. In the copolymers used in this invention, there may be present one of such maleic monomers or, in combination, two or more of such monomers.

The invention can be carried out using any of various plasticizers in a plasticizing amount, i.e., an amount which provides satisfactory plasticization of the adhesive composition prior to its end use and adequate flexibility of that composition during such end use. In many embodiments the plasticizer employed is normally liquid (i.e., at room temperature) although other embodiments are satisfactorily carried out with plasticizers which melt above room temperature but substantially below the melting point of the copolymer used in this invention. In each of such embodiments the plasticizer is liquid at the stage of preparation of the compositions of this invention at which the copolymer becomes substantially soluble therein. Although many different plasticizers are suitable, those preferably employed are esters, usually desirably containing at least two ester linkages per molecule. Commonly such plasticizers are selected from phosphates and polycarboxylates. For use in this invention, such esters are desirably aromatic compounds, even more preferably containing at least two aryl radicals per molecule.

Polycarboxylate plasticizers useful in this invention include particularly dicarboxylates such as, e.g. phthalates, terephthalates, isophthalates, adipates, succinates, glutarates, sebacates, pimelates, azelates, etc. Preferred are alkyl aryl dicarboxylates, and particularly alkyl benzyl dicarboxylates, in which the alkyl radical contains up to about 20 and preferably from about 4 to about 12 carbon atoms, e.g. the branched and normal butyl, amyl, hexyl, heptyl, octyl, nonyl, decyl and undecyl benzyl phthalates, adipates, glutarates, succinates, etc. Most preferred are the phthalates, including dialkyl phthalates in which the average carbon atom content per alkyl radical is from about 6 to about 12, e.g. diheptyl, dinonyl, dioctyl or didecyl phthalate and, generally most advantageously, alkyl benzyl phthalates in which the alkyl radical contains from about 4 to about 12 carbon atoms, and variations thereof such as, e.g. 7-(2,6,6,8-tetramethyl-4-oxa-3-oxo-nonyl) benzyl phthalate. Butyl benzyl phthalate is most preferred in many embodiments.

The phosphate plasticizers which can be used include triaryl phosphates such as, e.g. isopropylphenyl diphenyl, t-butyl-phenyl diphenyl, tricresyl, cresyl diphenyl or triphenyl phosphate; alkyl diaryl phosphates such as, e.g. $C_9$-$C_{11}$ alkyl diphenyl, isodecyl diphenyl, 2-ethyl-hexyl diphenyl, isooctyl diphenyl, $C_7$-$C_9$ alkyl diphenyl or isononyl dicresyl phosphate; dialkyl aryl phosphates such as, e.g. diisodecyl phenyl, di-isododecyl t-butyl-phenyl or di-undecyl cresyl phosphate; trialkyl phosphates such as, e.g. tributyl, trioctyl or tri($C_7$, 9, 11 alkyl) phosphate; and variations thereof such as, e.g. tributoxyethyl phosphate. In such phosphates, alkyl radicals directly attached to the phosphate radical each contain preferably from about 4 to about 20, and generally even more desirably from about 8 to about 12 carbon atoms. Aryl groups directly attached to the phosphate radical may be unsubstituted or substituted, e.g. with one or more alkyl substituents each normally containing from 1 to about 8, and usually most desirably about 3 or 4 carbon atoms. Preferred among those phosphates are alkyl diaryl phosphates, particularly t-butylphenyl or isopropylphenyl diphenyl phosphate.

The plasticizing esters just described are believed to be essentially non-reactive in preparation of the adhesive compositions of this invention. However, reactive plasticizers may also be used. Suitable examples include various monoalcohols such as cetyl alcohol and monoalkyl hydroxy ethers (e.g. lower alkyl cellosolves) and, usually even more desirably, aryl sulfonamides such as, e.g. ortho- and para-toluenesulfonamides which may be desirably N-substituted with a lower alkyl group such as, e.g. ethyl. In fact, such sulfonamides and similarly reactive plasticizers are used in preferred embodiments of the invention in which they serve as at least a portion of the plasticizer as well as at least a portion·of·the compatibilizer reactive with the aforedescribed maleic copolymer, the plasticizer in such embodiments of the invention thereby comprising at least a portion of the compatibilizer in those embodiments.

An important component of this invention is the "compatibilizer" which reacts with at least a portion of the maleic monomers of the aforementioned copolymer to render it essentially completely soluble in the adhesive compositions of this invention and substantially soluble in the plasticizer component of those compositions. The former solubilization converts the copolymer from a solid form to a dissolved constituent of a liquid adhesive and thus makes possible its utility for adhesive applications at temperatures below the melting point of the copolymer. Solubilization of the copolymer in the plasticizer may be essentially complete, e.g. in some of the hot melt adhesive embodiments of the invention, but in other embodiments the copolymer is usually desirably incompletely soluble in the plasticizer such that the resulting adhesive composition is an emulsion, i.e., a liquid mixture having more than one phase. Such emulsions are usually particularly attractive in adhesive applications, and it is an important feature of this invention that adhesive emulsion compositions prepared as described herein are normally very stable, i.e. the phases of the emulsion resist separation on standing of the emulsion for extended periods of time, e.g. up to a week or even longer. This stability of the emulsion compositions of the invention means that such compositions are conveniently useful for many purposes in which they are not used immediately after mixing of their constituents. This feature contributes to a conveniently lengthy open time, i.e., the time after application of the adhesive to a substrate during which it essentially completely retains its adhesive character before contact with the surface to which that first substrate is to be adhered. On the other hand, it has been found that compositions of this invention also typically have or develop optimum tack within a convenient length of time after application to a substrate exposed to the atmosphere.

The compatibilizer used in this invention is selected from monofunctional compounds which react with the aforementioned copolymer without resulting in substantial cross-linking of the copolymer. Various monofunctional compounds are useful for this purpose, but those usually most suitably employed are selected from water, alcohols such as, e.g. $C_1-C_6$ monoalkanols including ethanol, isopropanol and most desirably butanols such as isobutanol, cyclohexanol, diethyl ethanolamine, etc.; amides such as, e.g. methyl butyramide, and sulfonamides such as those described hereinbefore; organic amines having at least one active hydrogen attached to the amine nitrogen, e.g. dibutyl amines and propyl amine; aldehydes such as, e.g. butyraldehydes; enolizable ketones such as, e.g. methyl ethyl ketone; and mercaptans such as, e.g. butyl mercaptan. Mixtures of such compounds may be used and in fact, in embodiments employing water and/or an alcohol, it may be desirable or even necessary that there be present another compatibilizer compound to bring about the required solubilities of the maleic copolymer in the compositions of this invention. Although the invention is not to be limited in accordance with any theory of its reaction mechanism, it is believed that compatibilizer compounds such as sulfonamides may react differently with maleic monomers of the copolymer depending on whether or not more reactive monofunctional compounds such as, e.g. water, lower alkanols, etc. are present.

Although other proportions of the aforedescribed constituents are useful in many instances, the compositions of this invention are usually most satisfactorily prepared using from about 10 to about 30 parts of the copolymer, from about 20 to about 25 parts of the plasticizer and an amount of the compatibilizer sufficient to result in the desired solubilization of the copolymer without exceeding the desired level of its solubility in the plasticizer component. In even more preferred embodiments, from about 15 to about 25 parts of the copolymer are mixed with the proportions of plasticizer and compatibilizer just described. In many embodiments, the plasticizer preferably com-prises at least about 10 parts ester of a kind described hereinbefore. When the plasticizer is at least partially of a reactive kind, e.g. an aryl sulfonamide, such a reactive plasticizer is desirably present in at least about 5 parts. In aqueous compositions, water may be present up to about 60 parts or more, and for water-based adhesive compositions, the compatibilizer desirably contains at least about 1, and usually even more preferably between about 20 and about 40 parts water. When a lower alkanol or other alcohol is present, e.g. in a hot melt adhesive composition, it is preferably present in an amount between about 1 and about 5 parts. Although tack is generally enhanced by inclusion of plasticizer doubling as compatibilizer, the preferred proportion of reactive plasticzer may be limited in some instances by compatibility of the reacted copolymer with that plasticizer. When a mixture of essentially unreactive plasticizer (e.g. alkyl benzyl phthalate) and a reactive plasticizer (e.g. an aryl sulfonamide) is used, the ratio of the former to the latter usually should not substantially exceed about 1:1. On a calculated basis, it is preferred that excess mole equivalents of maleic acid and/or anhydride are present in most cases. Using more than about 0.2 equivalents of such excess per 100 grams of copolymer and more than about 50% copolymer in the mixture, hot melt compositions are typically formed. Smaller amounts of excess acid (e.g. from about 0.15 to about 0.2 equivalents per 100 grams of copolymer) normally provide stable, suitably flowing adhesive compositions.

In other embodiments, copolymer blends may be advantageously used. For example, blends of an ethylene maleic anhydride copolymer with a styrene maleic anhydride copolymer normally provide greater compatibility with the plasticizer than the ethylene maleic anhydride copolymer alone and, in some instances, require less plasticizer than the styrene maleic anhydride copolymer alone. Generally, large amounts of alcohol tend to decrease compatibility of the composition and result in a harder adhesive when cured, whereas large amounts of amide tend to favor a softer cured adhesive. Aqueous compositions typically provide good bonding to organic materials, e.g. cellulosics such as Masonite, wood, paper, cotton fabrics, etc. With reference to aqueous compositions containing from about 10 to about 30 parts copolymer, those containing less than about 20 parts water are normally of a gel variety, those containing from about 20 to about 40 parts water flow more readily, and those containing more than about 40 parts water are normally pourable or gunnable. Also generally, the compositions of this invention containing a mixture of reactive and essentially non-reactive plasticizers, e.g. an aryl sulfonamide and an alkyl benzyl phthalate, are good hot melt adhesives which provide strong bonds to glass. In such compositions, larger amounts of alcohol usually provide a harder cured adhesive, while larger amounts of amide promote tackiness which makes those compositions suitable as pressure sensitive adhesives.

Mixing of the compositions herein may be by any suitable means including, e.g. Waring blender, air mixer, Cowles dissolver, Myers mixer, etc. The mixing is normally carried out at temperatures substantially below the melting point or range of the copolymer, and usually between room temperature and about 150°C. In general, the mixing is satisfactorily carried out between room temperature and 99°C. for water-based compositions. Temperatures from about 50° to about 150°C. and preferably from about 60° to about 130°C. are typically used for the hot melt adhesive compositions to which little or no water is added. Generally, reaction of the compatibilizer and copolymer is essentially complete at the mixing temperature although if desired, the temperature can be raised following mixing to complete the reaction. Normally mixing times are between about 30 seconds and about two hours, although shorter or longer times may be satisfactory in some embodiments.

Various other conventional adhesive additives may be advantageously included in the compositions of this invention. For example, oxides of multivalent metals such as, e.g. iron, zinc, aluminum, tin and particularly antimony provide the cured adhesive with greater adhesion and water resistance. Colorants, fillers, diluents, and various other constituents may also be included, although the plasticizer and reacted copolymer make up normally at least about 20%, and preferably at least about 50% of an adhesive composition of this invention.

The following specific examples are for purposes of illustration only and do not imply any limitation on the scope of the invention. In these examples, the following adhesive composition constituents are used:

Copolymer A - A finely divided, particulate 1:1 mole ratio copolymer of styrene and maleic monomers (0.42 anhydride, 0.064 acid and 0.064 methyl half ester equivalents per 100 g copolymer) having a number average MW of 50,000 (90% having a major particle diameter smaller than 25 microns).

Copolymer B - A finely divided, particulate 1:1 mole ratio copolymer of ethylene and maleic anhydride (0.794 anhydride equivalents per 100 g copolymer) having a number average MW of 31,000 (90% having a major particle diameter smaller than 25 microns.

Plasticizer A - Butyl benzyl phthalate.

Plasticizer B (reactive) - Mixture of N-ethyl-o- and p-toluenesulfonamides.

$Fe_2O_3$ - Finely divided filler/cross-linker (90% having a major particle diameter smaller than 10 microns).

## Examples 1-15

Copolymers A and B, Plasticizers A and B, water, isobutanol and $Fe_2O_3$ are mixed in a 400 ml glass beaker in the proportions shown in Table I. Mixing is begun at room temperature and continued for 90 minutes, except for Examples 12-15 in which it is begun at 65°C. and continued for 1 hour. In each example, the resulting wet composition has good, stable compatibility of constituents. Within 72 hours after mixing, the composition of each example is spread 1 mm thick on the rough side of a 5 cm long end portion of a 5 cm wide strip of 0.63 cm thick Masonite and then compressed with 0.2 $kg/cm^2$ force for 2 minutes at room temperature between that end portion and the rough side of a 5 cm long end portion of a parallel identical strip of Masonite. After allowing 24-72 hours more for curing of the adhesives, lap shear strengths are determined on an Instron device in accordance with ASTM Test Procedure D-1002. In the case of Examples 12-15, duplicate determinations are run with fresh adhesive applied at a temperature between 120 and 130°C., and with adhesive aged one week at 120°C. and then similarly applied. In Examples 12-15, all cured compositions are rubbery and thermoplastic, while those in Examples 8-11 dry hard. Results of the lap shear tests are in Table I. In Examples 1-11, however, the adhesive bonds did not rupture and accordingly, the lap shear results represent breaking strengths of one of the two bonded Masonite strips rather than the ultimate bond strengths which are of greater magnitudes not precisely determined. In addition, the compositions prepared in Examples 12-15 exhibit high adhesion to glass.

TABLE I

| Example | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| Copolymer A, parts | -- | -- | -- | -- | -- | -- | -- | 15 | → | → | → | 20.2 → | | 10.1 → | |
| Copolymer B, parts | 25 | → | → | → | → | → | → | 12.5 | ← | → | | -- | -- | 6.3 → | |
| Plasticizer A, parts | 25 | → | → | → | → | → | 50 | 25 | → | → | | 20 | → | → | → |
| Plasticizer B, parts | -- | 5. | 10 | 15 | 20 | 25 | 25 | -- | 5 | 10 | 15 | 12.3 | 17.7 → | | 15 |
| Water, parts | 66 | → | → | → | → | → | 150 | 66 | → | → | → | -- | 8* | -- | -- |
| Isobutanol, parts | -- | -- | -- | -- | -- | -- | 5 | → | → | → | → | 3 | 1 → | | 2 |

|  |  |  |  |  |  |  |  |  |  |  |  |  | Fresh | | | |
|---|---|---|---|---|---|---|---|---|---|---|---|---|---|---|---|---|
| Lap shear strengths, kg | 220 | 170 | 197 | 227 | 197 | 227 | 204 | 204 | 161 | 215 | 165 | 93 | 102 | 24 | 29 |
|  |  |  |  |  |  |  |  |  |  |  |  |  | Aged | | | |
|  |  |  |  |  |  |  |  |  |  |  |  |  | 47 | 36 | 29 | 20 |

*(Fe$_2$O$_3$)

## Comparative Examples A-D

When the procedure of Examples 1-11 is duplicated except for substitution of commercially available pressure sensitive adhesives for the compositions of this invention, the following lap shear strengths result:

| Adhesive | Kg. |
|---|---|
| Weldwood Water Based | 96 |
| Duro Contact Water Based | 111 |
| Scotch Water Based | 148 |
| Liquid Nails (Solvent Based) | 73 |

As shown, the water based compositions of this invention provide lap shear bond strengths greater than those of each of the commercially available adhesives and, in most cases, at least one third greater than even the greatest bond strength provided by any of the commercially available adhesives. The hot melt embodiments of the invention also provide commercially attractive bond strengths which are in some cases, although substantially lower than those of their water based counterparts as would be expected, surprisingly comparable to the bond strengths provided by the commercially available pressure sensitive adhesives.

*     *     *

-15-

CLAIMS

1. An adhesive composition prepared by mixing (A) plasticizer, (B) normally-solid copolymer of olefinically unsaturated monomers of which a substantial proportion are maleic monomers selected from maleic anhydride, derivatives thereof which do not render said copolymer substantially soluble in said plasticizer below the melting point of said copolymer, and combinations thereof and (C) compatibilizer selected from monofunctional compounds which react with at least a portion of said maleic monomers to render said copolymer essentially completely soluble in said composition and substantially soluble in said plasticizer at a temperature below the melting point of said copolymer.

2. A composition of Claim 1 characterized in that said derivatives are selected from maleic acid and maleic acid esters and said proportion is between about 30 and about 70 mole percent of said unsaturated monomers.

3. A composition of Claim 1 or 2 characterized in that from about 20 to about 25 parts of said plasticizer are mixed with from about 10 to about 30 parts of of said copolymer.

4. A composition of Claim 3 characterized in that the plasticizer comprises at least about 10 parts ester selected from phosphates and polycarboxylates containing at least two aryl radicals per molecule and the compatibilizer is selected from water, alcohols, amides, organic amines, aldehydes, enolizable ketones, mercaptans and mixtures thereof.

5. A composition of Claim 3 characterized in that said plasticizer comprises at least a portion of the compatibilizer.

6. A composition of Claim 5 characterized in that the plasticizer comprises at least about 5 parts aryl

-16-

sulfonamide and the compatibilizer is selected from water, alcohols, sulfonamides and mixtures thereof.

7. A composition of Claim 1, 2, 3, 4, 5 or 6 characterized in that the plasticizer is predominantly $C_4$-$C_{12}$ alkyl benzyl phthalate.

8. A water-based adhesive composition of Claim 3 characterized in that said composition contains up to about 60 parts water.

9. A composition of Claim 8 characterized in that the remainder of said unsaturated monomers are selected from ethylene, styrene, vinyl lower alkyl ethers and combinations thereof.

10. A hot-melt adhesive composition of Claim 3 characterized in that the compatibilizer comprises from about 1 to about 5 parts alcohol and said temperature is between about 50 and 150°C.

0021694

**European Patent Office**

**EUROPEAN SEARCH REPORT**

Application number

EP 80 30 1923

## DOCUMENTS CONSIDERED TO BE RELEVANT

| Category | Citation of document with indication, where appropriate, of relevant passages | Relevant to claim |
|---|---|---|
| X | FR - A - 2 037 790 (NATIONAL STARCH) <br> * Claims * | 1-4,8-10 |
| | -- | |
| A | FR - A - 2 084 698 (DOW) <br> * Claims * | 1-10 |
| | -- | |
| A | US - A - 3 214 402 (J. GOBEL) <br> * Claims * | 1-10 |
| | -- | |
| | US - A - 4 073 756 (YOSHIHIKO YOTSUYANAGI et al.) <br> * Claims * | 1-10 |
| | -- | |
| A | FR - A - 2 224 535 (MONSANTO) <br> * Claims * | 1-10 |
| | ---- | |

**CLASSIFICATION OF THE APPLICATION (Int. Cl. ³)**

C 09 J 3/14

**TECHNICAL FIELDS SEARCHED (Int.Cl. ³)**

C 09 J 3/14

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 10-09-1980 | FOUQUIER |

EPO Form 1503.1  06.78